# FASCICULE DE BREVET EUROPEEN

(11) **EP 0 323 774 B1**
(45) Date de publication et mention de la délivrance du brevet: **05.05.1993**
(21) Numéro de dépôt: 88403203.8
(22) Date de dépôt: 16.12.1988
(51) Int. Cl.: E21B 43/32, B01F 17/00, B08B 17/02, F17D 1/02

(54) **Procédé pour retarder la formation et/ou réduire la tendance à l'agglomération des hydrates**
Verfahren zur Verzögerung der Bildung und/oder zur Reduktion der Agglomerationsneigung von Hydraten
Process to delay the formation and/or to reduce the tendency to agglomerate of hydrates

(30) Priorité: 30.12.1987 FR 8718433
(43) Date de publication de la demande: 12.07.1989
(73) Titulaire: INSTITUT FRANCAIS DU PETROLE, 92502 Rueil-Malmaison (FR)
(72) Inventeur: Sugier, André, F-92500 Rueil Malmaison (FR); Bourgmayer, Paul, F-92500 Rueil Malmaison (FR); Durand, Jean-Pierre, F-78170 La Celle Saint Cloud (FR)

(56) Documents cités:
- FR-A- 1 133 416
- FR-A- 2 570 162
- US-A- 2 865 453
- US-A- 3 644 107

## Description

L'invention concerne un procédé pour réduire la tendance à l'agglomération des hydrates de gaz naturel, de gaz de pétrole ou d'autres gaz par utilisation d'au moins un additif. Les gaz qui forment les hydrates peuvent notamment comprendre, par exemple, du méthane, de l'éthane, de l'éthylène, du propane, du propène, du n-butane, de l'i-butane, de l'H₂S et/ou du CO₂.

Ces hydrates se forment lorsque de l'eau se trouve en présence du gaz, soit à l'état libre, soit à l'état dissous dans une phase liquide, telle qu'un hydrocarbure liquide, et lorsque la température atteinte par le mélange notamment d'eau, de gaz et éventuellement d'hydrocarbures liquides, tels que de l'huile, devient inférieure à la température thermodynamique de formation des hydrates, cette température étant donnée pour une composition des gaz connue et lorsque leur pression est fixée.

La formation d'hydrates peut être redoutée, notamment dans l'industrie pétrolière et gazière, pour lesquelles les conditions de formation d'hydrates peuvent être réunies. En effet, pour diminuer le coût de production du pétrole brut et du gaz, tant au point de vue des investissements qu'au point de vue de l'exploitation, une voie envisagée, notamment en production en mer, est de réduire, voire de supprimer, les traitements appliqués au brut ou au gaz à transporter du gisement à la côte et notamment de laisser toute ou une partie de l'eau dans le fluide à transporter. Ces traitements en mer s'effectuent en général sur une plate-forme située en surface à proximité du gisement, de manière que l'effluent, initialement chaud, puisse être traité avant que les conditions thermodynamiques de formation des hydrates ne soient atteintes du fait du refroidissement de l'effluent avec l'eau de mer.

Cependant, comme cela arrive pratiquement, lorsque les conditions thermodynamiques requises pour former des hydrates sont réunies, l'agglomération des hydrates entraîne le remplissage et le blocage des conduites de transport par création de bouchons qui empêchent tout passage de pétrole brut ou de gaz.

La formation de bouchons d'hydrates peut entraîner un arrêt de la production et provoquer ainsi des pertes financières importantes. De plus, la remise en service de l'installation, surtout s'il s'agit de production ou de transport en mer, peut être très longue, car la décomposition des hydrates formés est très difficile à réaliser. En effet, lorsque la production d'un gisement sous-marin de gaz naturel ou de pétrole et de gaz comportant de l'eau atteint la surface du sol marin et est ensuite transportée au fond de la mer, il arrive par l'abaissement de la température de l'effluent produit, que les conditions thermodynamiques soient réunies pour que des hydrates se forment, s'agglomèrent et bloquent les conduites de transfert. La température au fond de la mer peut être, par exemple, de 3 ou 4°C.

Des conditions favorables à la formation d'hydrates peuvent aussi être réunies de la même façon à terre, pour des conduites pas ou trop faiblement enfouies dans le sol terrestre, lorsque par exemple la température de l'air ambiant est froide.

Pour éviter ces inconvénients, on a cherché dans l'art antérieur à utiliser des produits qui, ajoutés au fluide, pourraient agir comme inhibiteurs en abaissant la température thermodynamique de formation des hydrates.

Ainsi, Kuliev et al dans "Surfactants studied as hydrate-formation inhibitors" Gazovoe Delo n^{o} 10 1972, 17-19, rapporté dans Chemical Abstrats 80, 1974 98122 r, ont testé divers composés tensio-actifs non ioniques ou anioniques pour retarder la formation d'hydrates à l'intérieur d'un fluide refermant un gaz, notamment un hydrocarbure, et de l'eau.

On a également préconisé de l'isolation des conduits de transport, de manière à éviter que la température du fluide transporté n'atteigne la température de formation des hydrates dans les conditions opératoires.

Ces deux solutions sont très onéreuses car, pour la première, la quantité d'inhibiteurs à ajouter peut atteindre 10 à 20 % de la teneur en eau et ces inhibiteurs sont difficiles à récupérer complétement ; et pour la seconde des solutions, l'isolation de la conduite est, elle aussi, très coûteuse.

Il a été découvert que certains additifs, qui jusqu'à présent n'étaient pas utilisés dans ce but, présentent une excellente efficacité pour modifier le mécanisme de formation des hydrates, puisque au lieu de s'agglomérer rapidement les uns aux autres et de former des bouchons très solides, les hydrates formés se dispersent dans le fluide sans s'agglomérer et sans obstruer les conduites, tant que la température du fluide transporté n'est pas trop basse.

L'utilisation de ces additifs est particulièrement avantageuse du point de vue économique, puisque les quantités utilisèes sont très faibles (voire inférieures à 0,5 % en poids par rapport à l'eau) et que le coût des additifs est modéré.

L'invention propose donc un procédé pour réduire la tendance à l'agglomération des hydrates au sein d'un fluide comprenant au moins de l'eau et un gaz, dans des conditions où des hydrates peuvent se former à partir de l'eau et du gaz, caractérisé en ce qu'on incorpore audit fluide un additif comprenant au moins un composé tensio-actif ou amphiphile non-ionique choisi parmi les esters de polyols et d'acides carboxyliques, substitués ou non substitués, et les composés à fonction imide.

Par composés amphiphiles, on entend des composés comportant une partie hydrophile ou polaire et une partie oléophile ou lipophile.

En général, les composés amphiphiles non-ioniques sont caractérisés en ce qu'ils comportent :
- une partie hydrophile comportant des groupes, soit oxyde d'alkylène, soit hydroxyles, soit encore alkylène amine,
- une partie oléophile comportant une chaîne hydrocarbonnée dérivée d'un alcool, d'un acide gras, d'un dérivé allegé du phénol, ou d'une polyoléfine par exemple à base d'isobutène ou de butènes, et
- une liaison entre la partie hydrophile et la partie oléophile qui peut être par exemple un pont : éther, ester ou amide : la liaison peut encore être obtenue par un atome d'azote ou de soufre.

Parmi les composés amphiphiles non-ioniques considérés dans l'invention, on décrit plus particulièrement ci-après les esters de polyols et d'acides carboxyliques, substitués ou non-substitués, en mentionnant les acides carboxyliques et les polyols à partir desquels ils peuvent être formés.

Ces acides carboxyliques peuvent être des acides carboxyliques linéaires ou non-linéaires, (par exemple ramifiés), saturés ou insaturés, correspondant, par exemple, aux acides gras contenus dans les huiles et graisses végétales et animales. Les acides carboxyliques pourront être alcoxylés.

Parmi les acides linéaires saturés ou insaturés, on peut citer les acides : butyrique (C4:0), caproïque (C6:0), caprylique (C8:0), caprique (C10:0), laurique (12:0), myristique (C14:0), palmitique (C16:0), stéarique (C18:0), arachidique (C20:0), béhénique (C22:0), lignocérique (C24:0) correspondant aux acides à nombre pair d'atomes de carbone (4 à 24) ; les acides insaturés : palmitoléïque (C16:1), élaïdique (C18:1t), oléïque (C18:1c), linoléïque (C18:2), linolénique (C18:3), gadoléïque (C20:1), érucique (C22:1). Pour chaque acide, on indique le nombre d'insaturations éthyléniques (0, 1, 2 ou 3) ; c signifie cis et t trans.

Ces acides saturés et insaturés sont généralement présents tels quels, ou en mélange sous forme liée, dans les huiles, les esters, dans les mélanges d'acides gras.

Les huiles utilisables les plus courantes sont, par exemple, les huiles d'arachide, de colza ancien et nouveau, de coprah, de coton, de germe de blé, de germe de maïs, d'olive, de palme, de palmiste, de soja, de suif, de saindoux, de tournesol, de beurre, de carthame, de tall-oil (extraite des résineux), de poissons, de karité.

De même, les huiles végétales ou les graisses animales donnent des mono et diglycérides qui peuvent apporter des propriétés émulsifiantes bénéfiques.

On pourra aussi utiliser des acides à nombre impair d'atomes de carbone.

Les acides carboxyliques pourront être des diacides ou triacides correspondant aux dimères et trimères des acides gras ou à des acides dicarboxyliques, comme par exemple l'acide dodécanedioïque pour lequel l'une des fonctions acides peut être libre.
Les acides carboxyliques pourront être des acides non-linéaires, tels que l'acide abiétique.

L'acide carboxylique pourra être l'acide undécylénique.

Les acides carboxyliques pourront être des acides hydroxycarboxyliques, tels que l'acide ricinoléïque ou hydroxystéarique tiré du ricin ou du ricin hydrogéné.

Les acides carboxyliques pourront être des acides époxycarboxyliques, tels que l'acide époxystéarique, ou des mélanges tirés des huiles époxydées.

Les acides carboxyliques pourront être sous forme de polymères, comme les acides estolisés obtenus par exemple à partir du ricin et dont la formule est : 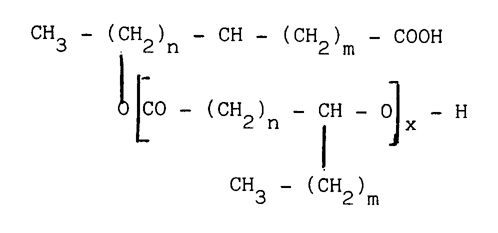
avec 1 ≦ X ≦ 20 et n + m = 15

L'acide carboxylique pourra être un acide alkénylsuccinique et l'anhydride pourra être un anhydride alkénylsuccinique. Le groupe alkenyle de l'acide ou de l'anhydride pourra dériver d'un polymère d'une monooléfine contenant de 2 à 5 atomes de carbone.

Ce polymère pourra être un polyisobutène dans lequel le groupe alkényle (par exemple polyisobutényle) à une masse moléculaire moyenne de 300 à 5000.

Les polyols considerés peuvent être :
- des diols, tels que l'éthylèneglycol, les polyalkylèneglycols (comme le polyéthylèneglycol ou le polypropylèneglycol) ou le néopentylglycol (NPG),
- des triols, tels que le glycérol ou le triméthylolpropane (TMP),
- des tétrols, tels que le pentaérythritol, l'érythritol (mono, di ou trisubstitués), le sorbitol, des polyols tels que le sorbitol, le mannitol, les polyglycérols, le dipentaérythritol, ou des sucres comme le saccharose, le glucose, le fructose, ou des dérivés de ces différents produits tels que l'amidon.

Les esters de polyols possédant des groupements hydroxyles libres pourront éventuellement être éthoxylés.

Les polyglycérols utilisés pourront être des polyglycérols substitués, tels que des polyglycérols mono ou disubstitués, alcoxylés.

L'additif pourra comprendre un des éléments du groupe des esters de polyglycérol suivant : mono-oléate de triglycérol, mono-oléate d'hexaglycérol, trioléate d'hexaglycérol, mono-oléate de décaglycérol, monostéarate de décaglycérol, monolaurate de décaglycérol.

Outre les résultats avantageux que les polyglycérols confèrent pour lutter contre la formation des hydrates et les blocages qu'ils produisent, les polyglycérols peuvent selon leur degré de polymérisation avoir des HLB (Hydrophilic-Lipophilic-Balance) très variables et ainsi peuvent s'adapter au mieux aux différentes natures du fluide comportant l'eau, le gaz et éventuellement une huile, telle qu'un condensat.

Parmi les composés amphiphiles non-ioniques utilisés dans l'invention on mentionne également les composés comportant au moins un groupe imide; ils peuvent être préparés par exemple par réaction d'un anhydride alkénylsuccinique avec une ou plusieurs polyéthylènepolyamines de façon à obtenir des alkénylsuccinimides.

Les polyamines qui conviennent pour la préparation de tels alkénylsuccinimides répondent plus particulièrement à la formule générale :

H₂N CH₂ CH₂ -(--NH CH₂ CH₂ --)-ₘ NH₂

dans laquelle m est un entier de 0 à 10. Ces polyamines bi-primaires peuvent être par exemple l'éthylènediamine, ou des polyéthylène-polyamines telles que la diéthylènetriamine, la triethylènetetramine, la tétraéthylènepentamine, la pentaéthylènehexamine ou encore des mélanges de ces polyamines commercialement disponibles.

L'additif pourra être dans une proportion en poids par rapport à l'eau comprise entre 10 et 50 000 ppm et de préférence entre 100 et 5 000 ppm.

L'additif pourra être associé en outre, à un ou plusieurs autres composés tensio-actifs, de préférence un tensio-actif anionique, ou pourra consister en un mélange d'additifs.

Ces composés du mélange pourront avoir en commun le même acide carboxylique et/ou le même polyol.

L'additif pourra en outre comporter un alcool, tel du méthanol ou un polyalcoxyglycol.

On pourra utiliser ledit additif pour former des hydrates sous forme dispersée et/ou transporter des effluents pétroliers comportant de l'eau et formant avec elle des hydrates.

Lorsque l'on utilisera ledit additif pour le transport d'effluents pétroliers, on pourra ajouter le composé à l'eau et/ou à l'effluent pétrolier dans une proportion comprise entre 50 et 50 000 ppm en poids par rapport à l'eau et de préférence entre 100 et 5 000 ppm.

Les exemples suivants illustrent l'invention sans en limiter la portée. Les exemples 1, 2 et 9 sont donnés à titre de comparaison.

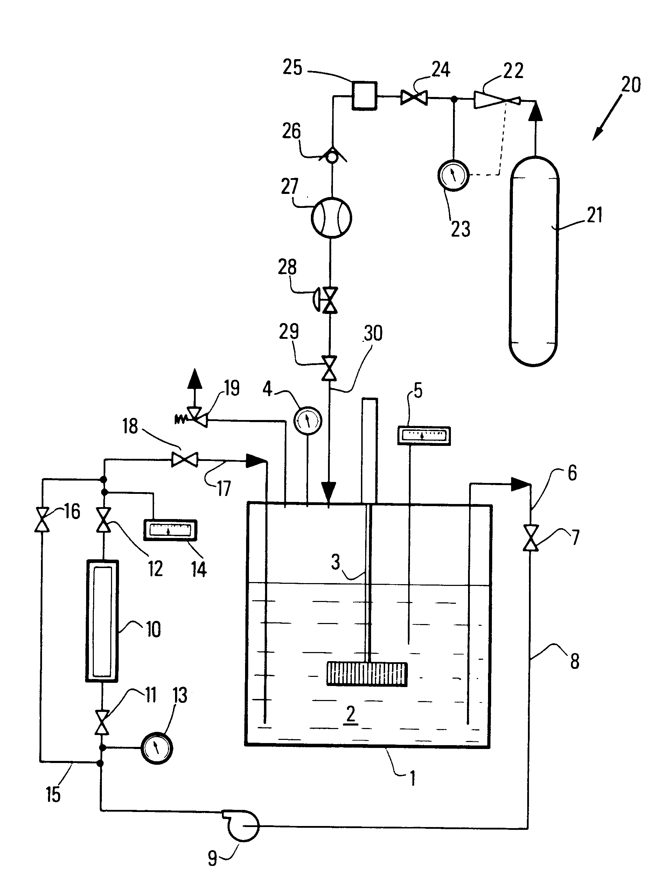

Dans ces exemples, pour évaluer l'efficacité des additifs, on a procédé à des essais de formation d'hydrates à partir de gaz, de condensat et d'eau, à l'aide d'un appareillage schématisé par la figure annexée.

L'appareillage comporte un réacteur 1 thermorégulé, de 2 litres de volume, dans lequel est placé un liquide 2, tel un mélange de condensat et d'eau, qui est agité en permanence par un agitateur 3 monté en bout d'une turbine. L'alimentation en gaz du réacteur 1 est régulée par un manomètre 4, la température du réacteur et de la boucle de circulation est contrôlée au moyen de bains thermostatiques dont la température est régulée par la sonde de température 5. Une canalisation 6 plongeant d'un côté dans le liquide 1 alimente par son autre côté une boucle de circulation 8 que l'on peut fermer par la vanne 7.

Sur la boucle de circulation 8 est placée une pompe 9 assurant la circulation du fluide et du gaz. La boucle 8 comporte en outre une chambre d'observation 10, isolable par deux vannes 11 et 12, dans laquelle on peut observer la formation d'hydrates.

En amont et aval de cette chambre se trouvent respectivement un indicateur de pression 13 et un indicateur de température 14. L'appareillage comporte une dérivation 15 de la chambre d'observation, cette dérivation étant munie d'une vanne d'arrêt 16.

Le fluide et le gaz, ayant traversé la chambre d'observation 10 ou la dérivation 15, rejoignent le réacteur par une canalisation de retour 17. Une vanne 18 permet d'isoler le circuit de la canalisation de retour. Le réacteur 1 comporte en outre une soupape de sécurité 19.

L'alimentation en gaz du réacteur 1 est réalisée par le circuit désigné 20 dans son ensemble et qui comprend les éléments suivants, montés à la suite des uns des autres : un réservoir 21 de gaz, un détendeur 22, un manomètre 23 à pression consignée commandant le détendeur 22, une vanne de fermeture 24, un filtre 25, un clapet antiretour 26, un débitmètre 27, une vanne électronique 28 commandée par le manomètre 4 et assurant la consigne de pression à l'intérieur du réacteur par modification du flux gazeux, une vanne d'arrêt 29 et une canalisation d'alimentation 30 pénétrant dans le réacteur.

Dans un exemple de réalisation, la boucle de circulation 8 fait 10 mètres de longueur et est réalisée en tube d'environ 19 mm (3/4") de diamètre intérieur. La pompe de circulation 9 permet de réaliser des vitesses d'écoulement jusqu'à 1 m/s.

La formation d'hydrates par réaction du gaz avec l'eau, se traduit par une consommation de gaz qui est déterminée par le débitmètre 27, et qui est contrôlée par la vanne électrique 28 et le capteur différentiel de pression 23, de manière que la pression soit maintenue constante dans le circuit au 1/50ème de bar près.

Pour déterminer la température à laquelle se forment les hydrates, on réalise à partir de la température ambiante, une descente rapide de température de 3°C par heure jusqu'à 1°C.

Ayant alors noté la température de formation des hydrates, qui se traduit par une consommation du gaz, on remonte la température du réacteur et de la boucle de circulation de 5°C au-dessus de cette température de formation et on attend que la décomposition des hydrates soit complète. Cette décomposition se manifeste par un accroissement de la pression dans le réacteur 1 et par 1a disparition visuelle de l'opacité du fluide qui est produite par la présence d'hydrates.

Enfin, on réalise une descente lente en température à raison de 1°C/heure et l'on détermine la température à laquelle les hydrates commencent à se former, puis on détermine la température à laquelle le circuit est totalement bouché et où aucune circulation du fluide n'est possible.

### Exemple n^{o} 1 (comparatif)

Dans cet exemple, on opère avec un fluide composé en volume de 20 % d'eau et de 80 % de condensat. La composition pondérale du condensat est : pour les molécules ayant moins de 11 atomes de carbone : 20 % de paraffines et d'isoparaffines, 48 % de naphtènes, 10 % d'aromatiques ; et pour les molécules ayant au moins 11 atomes de carbone : 22 % d'un mélange de paraffines, d'isoparaffines, de naphtènes et d'aromatiques.

Le gaz utilisé comprend en volume 98 % de méthane et 2 % d'éthane. L'expérimentation est conduite sous une pression de 7MPa maintenue constante par rapport de gaz. Dans ces conditions, la température de début de formation d'hydrates, lors de la deuxième descente en température, est de 11,4°C, et on obtient un blocage de la circulation par croissance et coalescence des hydrates lorsque la température atteint + 11°C (284 K), soit 24 minutes après le début de formation des hydrates.

### Exemple n^{o} 2 (comparatif)

Dans cet exemple, on opère comme dans l'exemple n^{o} 1, avec le même fluide, le même gaz et la même pression, mais on ajoute au fluide en circulation 5 % poids de méthanol par rapport à l'eau du mélange. Dans ces conditions, on constate que la température à laquelle les hydrates commencent à se former est de 9,4°C et que la température à laquelle aucune circulation de fluide n'est plus possible est de 9°C.

### Exemple n^{o} 3

On opère comme dans l'exemple n^{o} 1, mais on ajoute au fluide en circulation 0,2 % poids par rapport à l'eau de monolaurate de sorbitan.

Dans ces conditions, on constate que la température à laquelle les hydrates commencent à se former est de 9,7°C, et qu'il y a blocage de la circulation de fluide à une température de + 5°C.

### Exemple n^{o} 4

On opère comme dans l'exemple N^{o} 1, mais on ajoute au fluide en circulation 0,2 % poids par rapport à l'eau d'un mélange de 80 % en poids de monolaurate de sorbitan et de 20 % en poids de dioctylsulfosuccinate de sodium (à 65 % poids de concentration).

Dans ces conditions, on constate que la température à laquelle les hydrates commencent à se former est de 9,3°C et qu'il y a blocage de la circulation du fluide à une température de + 4,5°C.

### Exemple n^{o} 5

On opère comme dans l'exemple n^{o} 1, mais on ajoute au fluide en circulation 0,2 % poids par rapport à l'eau d'un mélange constitué de 50 % en poids de monolaurate de sorbitan et 50 % en poids de trioléate de sorbitan.

Dans ces conditions, on constate que la température à laquelle les hydrates commencent à se former est de 9,2°C et qu'il y a blocage de la circulation de fluide à une température de + 2°C.

### Exemple n^{o} 6

On opère comme dans l'exemple n^{o}1, mais on ajoute au fluide en circulation 0,2 % poids par rapport à l'eau de monolaurate de sorbitan éthoxylé avec un taux d'éthoxylation de 20.

Dans ces conditions, on constate que la température à laquelle les hydrates commencent à se former est de 9,3°C et qu'il y a blocage de la circulation de fluide à une température de + 3°C.

### Exemple n^{o} 7

On opère comme dans l'exemple n^{o}1, mais on ajoute au fluide en circulation 0,2 % poids par rapport à l'eau d'un mélange de 50 % en poids de monolaurate de sorbitan éthoxylé ayant un taux d'éthoxylation de 20 et de 50 % en poids de sesqui-oléate de sorbitan.

Dans ces conditions on constate que la température à laquelle les hydrates commencent à se former est de 8,8°C et qu'il y a blocage de la circulation de fluide à une température de - 3°C.

### Exemple n^{o} 8

On opère comme dans l'exemple n^{o} 1, mais on ajoute au fluide en circulation 0,5 % poids par rapport à l'eau d'une solution contenant 70 % en poids de polyisobuténylsuccinimide dans une coupe aromatique. Le polyisobutényl-succinimide est obtenu par réaction d'anhydride polyisobuténylsuccinique (dont le groupement polyisobutényle à une masse moléculaire moyenne en nombre voisine de 3000) et d'un mélange commercial de tétraéthylène pentamine (TEPA) dans un rapport molaire anhydride/TEPA de 1,5.

Dans ces conditions, on constate que la temérature à laquelle les hydrates commencent à se former est de 7,4°C et qu'il y a blocage de la circulation du fluide à + 2°C.

### Exemple n^{o} 9 (comparatif)

On opère comme dans l'exemple n^{o} 1, mais on ajoute au fluide en circulation 0,2 % poids par rapport à l'eau d'un mélange de 50 % en poids de nonylphénol éthoxylé de masse volumique égale à 1,12 et de 50 % en poids de octylphénol éthoxylé de masse volumique égale à 1,075.

Dans ces conditions, on constate que la température à laquelle les hydrates commencent à se former est de 10,2°C et qu'il y a blocage de la circulation du fluide à + 7,2°C.

### Exemple n^{o} 10

On opère comme dans l'exemple n^{o} 1, mais on ajoute au fluide en circulation 0,5 % poids par rapport à l'eau de monoglycéride de l'acide palmitique.

Dans ces conditions, on constate que la température à laquelle les hydrates commencent à se former est de 7,9°C et qu'il y a blocage de la circulation du fluide à + 5,6^{°}C.

### Exemple n^{o} 11

On opère comme dans l'exemple n^{o} 1, mais on ajoute au fluide en circulation 0,5 % poids par rapport à l'eau d'un mélange de 85 % poids de monoglycéride de l'acide palmitique et de 15 % poids de dioctyl sulfosuccinate de sodium à 65 % en poids de concentration.

Dans ces conditions, on constate que la température à laquelle les hydrates commencent à se former est de 7,8°C et qu'il y a blocage de la circulation du fluide à + 5,1°C.

Dans les exemples n^{o}1 et 2, en présence de méthanol seulement, ou avec le fluide à tester seul, on observe que le blocage de la bouche s'effectue très rapidement après le début de formation des hydrates, soit 0,4°C au dessous de la température de début de formation, soit 24 minutes après avoir atteint cette température, temps nécessaire à la coalescence et à la croissance des hydrates.

Par contre, lorsque l'on utilise des esters de polyols, tels que des esters de sorbitan, on constate que la température de blocage de la circulation de fluide est très inférieure à la température de début de formation des hydrates.

On note aussi, que pour la composition du fluide utilisé, l'éthoxylation a un effet bénéfique sur les abaissements des températures de début de formation des hydrates et de blocage de la circulation pour le monolaurate de sorbitan (exemples 3 et 6), et que, tout en conservant la même concentration en additif, l'association d'un polyoléate de sorbitan est aussi favorable. Le sesqui-oléate a de plus un effet supérieur au trioléate.

L'effet bénéfique de l'addition du dioctylsulfosuccinate de sodium, qui est un composé amphiphile anionique, à un composé amphiphile non ionique consiste à abaisser substantiellement la température de début de formation des hydrates et notamment la température de blocage de la circulation de fluide.

Les exemples 3 et 4 montrent un gain de - 0,4°C et de - 0,5°C respectivement sur les températures de début de formation et de blocage d'un fluide comportant 0,2 % de monolaurate de sorbitan.

Les exemples 10 et 11 montrent un gain de - 0,1°C et de - 0,5°C respectivement sur les températures de début de formation et de blocage d'un fluide comportant 0,5 % de monoglycéride de l'acide palmitique.

## Revendications

1. Procédé pour réduire la tendance à l'agglomération des hydrates au sein d'un fluide comprenant de l'eau et un gaz, dans des conditions où des hydrates peuvent se former à partir d'eau et du gaz, caractérisé en ce qu'on incorpore audit fluide un additif comprenant au moins un composé tensio-actif non ionique choisi parmi les esters de polyols et d'acides carboxyliques, substitués ou non substitués, et les composés à fonction imide.

2. Procédé selon la revendication 1, caractérisé en ce que ledit composé tensio-actif non ionique est un ester de polyol et d'acide carboxylique, substitué ou non substitué, dans lequel l'acide carboxylique est un acide carboxylique linéaire, saturé ou insaturé, un acide hydroxycarboxylique, un acide époxycarboxylique, un acide estolisé, un acide dicarboxylique ou un acide tricarboxylique, trimère d'acide gras.

3. Procédé selon la revendication 1 ou 2, caractérisé en ce que ledit composé tensio-actif non ionique est un ester de polyol et d'acide carboxylique substitué ou non substitué dans lequel le polyol est choisi parmi l'ethylèneglycol, les polyalkylèneglycols, le néopentylglycol, le glycérol, les polyglycérols, le triméthylolpropane, le pentaérythritol, le dipentaérythritol, le sorbitan, le mannitol, mannitan, le glucose, le saccharose,le fructose et l'amidon.

4. Procédé selon la revendication 1, caractérisé en ce que ledit ester de polyol est formé entre un acide ou un anhydride alkénylsuccinique et un polyalkylèneglycol.

5. Procédé selon la revendication 4, caractérisé en ce que ledit ester de polyol est formé entre un anhydride polyisobuténylsuccinique et un polyéthylèneglycol.

6. Procédé selon la revendication 1, caractérisé en ce que ledit composé tensio-actif non-ionique est un alkénylsuccinimide.

7. Procédé selon l'une des revendications 1 à 6, caractérisé en ce que ledit additif comprend en outre au moins un composé tensio-actif anionique.

8. Procédé selon l'une des revendications 1 à 7, caractérisé en ce que ledit additif est incorporé audit fluide dans une proportion de 10 à 50 000 ppm en poids par rapport à l'eau.

9. Procédé selon la revendication 8, caractérisé en ce que ladite proportion est de 100 à 5 000 ppm.

## Claims

1. A process for reducing the agglomeration tendency of hydrates within a fluid comprising water and a gas, in conditions under which hydrates can be formed from water and the gas, characterized in that an additive comprising at least one non-ionic tensio-active compound selected from esters of polyols and substituted or unsubstituted carboxylic acids, and compounds with imide function.

2. A process according to claims 1, characterized in that said non-ionic tensio-active compound is an ester of polyol and substituted or unsubstituted carboxylic acid, wherein the carboxylic acid is a straight chain, saturated or unsaturated carboxylic acid, a hydroxy carboxylic acid, an epoxy carboxylic acid, an estolized acid, a dicarboxylic acid or a tricarboxylic acid, trimer of fatty acid.

3. A process according to claim 1 or 2, characterized in that said non-ionic tensio-active compound is an ester of polyol and substituted or unsubstituted carboxylic acid, wherein the polyol is selected from ethyleneglycol, polyalkyleneglycols, neopentylglycol, glycerol, polyglycerols, trimethylolpropane, pentaenythritol, dipentaenythritol, sorbitol, sorbitan, mannitol, mannitan, glucose, saccharose, fructose and starch.

4. A process according to claim 1, characterized in that said ester of polyol is formed between an alkenylsuccinic acid or anhydride and a polyalkyleneglycol.

5. A process according to claim 4, characterized in that said ester of polyol is formed between a polysiobutenylsuccenic anhydride and a polyethyleneglycol.

6. A process according to claim 1, characterized in that said non-ionic tensio-active compound is an alkenylsuccinimide.

7. A process according to one of claims 1 to 6, characterized in that said additive further comprises at least one anionic tensio-active compound.

8. A process according to one of claims 1 to 7, characterized in that said additive is incorporated to said fluid in a proprotion from 10 to 50, 000 ppm by weight with respect to water.

9. A process according to claim 8, characterized in that said proportion is from 100 to 5, 000 ppm.

## Patentansprüche

1. Ein Verfahren zur Verringerung der Agglomerationsneigung von Hydraten innerhalb Wasser und ein Gas enthaltenden Flüssigkeiten unter Bedingungen, unter denen Hydrate aus Wasser und dem Gas gebildet werden können, dadurch gekennzeichnet, daß ein Additiv wenigstens eine nichtionische oberflächenaktive, aus Estern von Polyolen und substituierten oder nicht substituierten Carbonsäuren ausgewählte Verbindung und eine Verbindung mit Imid-Funktion umfasst.

2. Ein Verfahren nach Anspruch 1, dadurch gekennzeichnet, daß die nichtionische oberflächenaktive Verbindung ein Ester eines Polyols und einer substituierten oder nicht substituierten Carbonsäure ist, worin die Carbonsäure eine geradkettige, gesättigte oder ungesättigte Carbonsäure, eine Hydroxycarbonsäure, eine Epoxycarbonsäure, eine veresterte Säure, eine Dicarbonsäure, Tricarbonsäure oder Fettsäuretrimeres ist.

3. Ein Verfahren nach Anspruch 1 oder 2, dadurch gekennzeichnet, daß die nichtionische oberflächenaktive Verbindung ein Ester eines Polyols und einer substituierten oder nicht substituierten Carbonsäure ist, worin das Polyol ausgewählt ist aus Ethylenglykol, Polyalkylenglykol, Neopentylglykol, Glycerol, Polyglycerolen, Trimethylpropan, Pentaerythritol, Dipentaerythritol, Sorbit, Sorbinsäure, Manit, Manonsäure, Glucose, Saccharose, Fructose und Stärke.

4. Ein Verfahren nach Anspruch 1, dadurch gekennzeichnet, daß der Ester des Polyols aus einer Alkenylbernsteinsäure oder Alkenylbernsteinsäureanhydrid und einem Polyalkylenglykol gebildet ist.

5. Ein Verfahren nach Anspruch 4, dadurch gekennzeichnet, daß der Ester des Polyols aus einem Polyisobutenylbernsteinsäureanhydrid und einem Polyethylenglykol gebildet ist.

6. Ein Verfahren nach Anspruch 1, dadurch gekennzeichnet, daß die nichtionische oberflächenaktive Verbindung ein Alkenylsuccinimid ist.

7. Ein Verfahren nach einem der Ansprüche 1 bis 6, dadurch gekennzeichnet, daß dieses Additiv zusätzlich wenigstens eine anionische oberflächenaktive Verbindung enthält.

8. Ein Verfahren nach einem der Ansprüche 1 bis 7, dadurch gekennzeichnet, daß dieses Additiv in besagte Flüssigkeit in einem Verhältnis von 10 zu 50.000 Gewichts-ppm, bezogen auf das Wasser, eingebracht ist.

9. Ein Verfahren nach Anspruch 8, dadurch gekennzeichnet, daß dieses Verhältnis 100 bis 5.000 ppm beträgt.
